Europäisches Patentamt

**European Patent Office**

**Office européen des brevets**

(11) Publication number: **0 126 574**
**A1**

(12) # EUROPEAN PATENT APPLICATION

(21) Application number: **84303042.0**

(22) Date of filing: **04.05.84**

(51) Int. Cl.³: **A 01 G 27/00**

(30) Priority: **13.05.83 AU 9350/83**

(43) Date of publication of application: **28.11.84**
**Bulletin 84/48**

(84) Designated Contracting States: **AT BE CH DE FR GB IT LI LU NL SE**

(71) Applicant: **Quinn, Raymond Harold, Josephine Avenue, Mount Waverley Victoria, 3150 (AU)**
Applicant: **Pinch, Maurice Randall, 12 Flynn Street, Springvale Victoria, 3171 (AU)**

(72) Inventor: **Quinn, Raymond Harold, 40 Josephine Avenue, Mount Waverley Victoria, 3150 (AU)**

(74) Representative: **Batchellor, John Robert et al, BATCHELLOR, KIRK & EYLES 2 Pear Tree Court Farringdon Road, London EC1R 0DS (GB)**

(54) **Plant waterer.**

(57) A portable plant waterer comprises a vessel (10) for containing water and having a filler cap (11) which combines with the vessel to form a figurine which is aesthetically appealing. A hollow conical spike (12) on the underside of the vessel is adapted for insertion into the soil (13) around a plant and supports or at least stabilizes the vessel. An outlet in the bottom of the vessel communicates with the inside of the spike (12) and a tube (14) in the vessel extends from above the normal water level to the outlet in sealing engagement therewith such that water is prevented from escaping from the outlet other than via a wick (15) which extends from below the water level to the soil, via the tube (14), the spike (12) and a hole in the bottom of the spike (12). The wick (15) draws water from the vessel and maintains the soil around a plant in a moist condition.

PLANT WATERER

This invention relates to a plant waterer and in particular to a self contained moveable plant waterer adapted to provide a continuous slow supply of water to a plant over an extended period of time. The invention is particularly adapted for use with plant pots and is most suitable for indoor plants.

Many different forms of plant waterers of the general kind in question are known and one form uses a wick to draw water from an outer bowl which surrounds the underside of a plant pot, into the soil surrounding the plant. Such arrangements work quite satisfactorily in enabling the plant to be left for extended periods without attention merely by filling the outer bowl with water via a filling tube which extends upwardly through the inner or plant containing bowl. The outer bowl holds sufficient water to last for two or more weeks at the rate the water is drawn, via the wick, into the soil. However, such arrangements are relatively expensive compared to conventional plant pots and provide limited choice of plant pot. Furthermore, the pot is confined to use with the particular plant therein and thus there is no versatility in so far as being able to use the device with other plant pots or even outdoor plants which are not in pots.

Accordingly it is an object of this invention to provide an improved plant waterer of a portable type which may be readily moved from one plant to another to supply water to the plant over an extended period.

Thus the invention provides a portable plant waterer comprising a storage vessel adapted to be filled with water and having means for supporting said vessel in a position generally above the soil surrounding a plant, said vessel having a waterproof tube extending from within the vessel at a point above the normal water level to an outlet in the vessel wall in sealing engagement with the vessel wall, and a wick extending from within said vessel at the lowermost point in use, through said tube to the outside of said vessel whereby water in the vessel may be delivered by said wick to said soil.

In order that the invention may be more readily understood one particular embodiment will now be described with reference to the accompanying drawings, wherein:

Fig. 1 is a sectional front elevation of a plant waterer according to the invention, and

Fig. 2 is a front elevation of the plant waterer shown in Fig. 1.

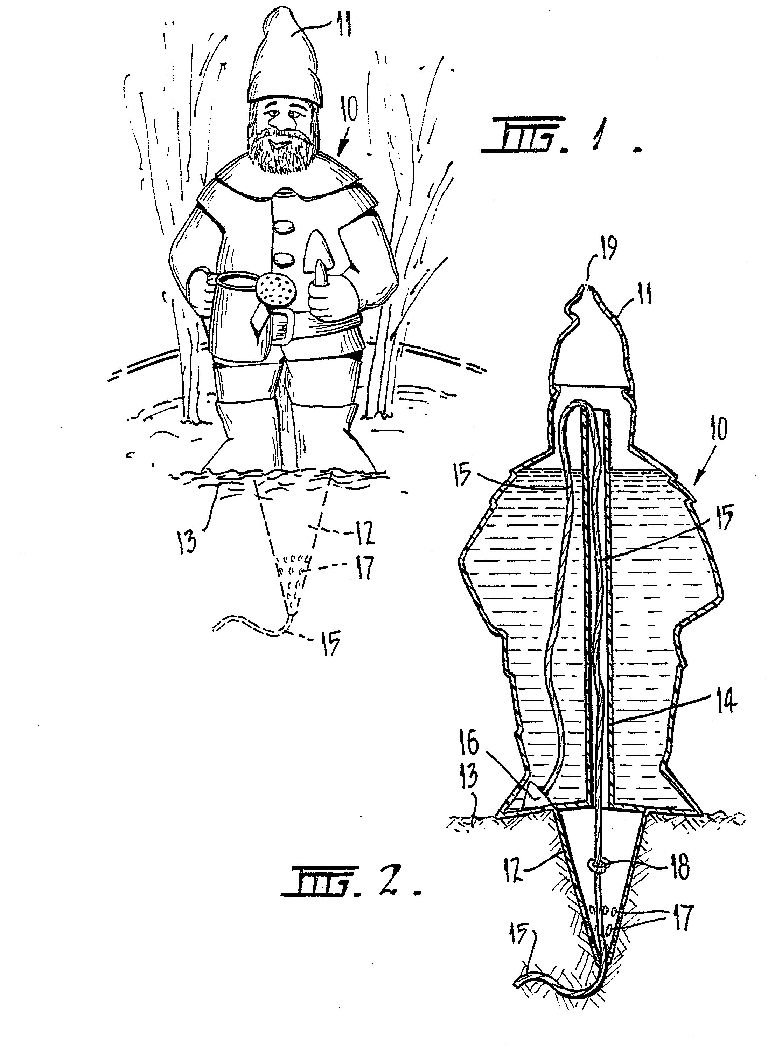

The plant waterer is shown to comprise a plastic vessel 10 having a removable cap 11 which together with the vessel forms a figurine which may take many differing forms. The cap 11 may be a screw cap or, as in this embodiment, a press-type cap which clips over a rim around the top edge of the vessel 10. The top 11 enables the vessel to be filled with water and also prevents loss of water by evaporation. The top has an air hole 19 to allow a small passage of air into the vessel as the water is used. The vessel has a downwardly projecting spike 12 which is arranged on the underside of the vessel for the purpose of supporting the vessel above soil 13 surrounding a plant as shown in Fig. 2. In soft soil the spike 12 may penetrate to a point where the bottom of the vessel bears on the soil whereas in hard soil the tapering shape of the spike 12 may prevent complete insertion of the spike into the soil and thus the vessel 10 would be supported above the surface of the soil.

A plastic tube 14 extends upwardly inside the vessel 10 from the bottom of the vessel to a point above the normal water level. The plastic tube 14 is in sealing engagement with the bottom of the vessel such that water inside the vessel is unable to escape between the tube and bottom of the vessel. The tube 14 may be glued or otherwise affixed to the bottom of the vessel 10 and in fact may be moulded integral with the vessel. A wick 15 of absorbent material extends from the inside of the container through the tube 14 through the spike 12 and out through a hole in the bottom of the spike 12. The inner end of the wick 15 is arranged at the bottom of the vessel 10 on the inside thereof and has a weight 16 of non-corrosive material for the purpose of holding the wick down in the water. A knot 18 is tied in wick 15 towards the end which extends out through the spike 12. The knot prevents the wick from being pulled too far out of the spike and also reduces the possibility of the wick disappearing back into the spike from the outside since the size of the knot is made sufficiently large so as to not readily slide through the tube 14.

It should be appreciated that water inside the vessel 10 is transported by the wick 15 upwardly to the top of the tube 14 and then downwardly through the tube 14 to the outside of the vessel 10 where it is absorbed into the soil 13 to continually moisten the soil. A series of holes 17 are arranged around the bottom end of the spike 12 to allow any water which builds up in the bottom end of the spike to be dissipated into the soil. In this manner the contents of the vessel are dissipated over a prolonged period of time and the soil is thereby maintained in a moist condition. The length of time taken for the vessel to empty depends on the size of the vessel and the size and type of wick used and may be varied in accordance with different applications of the plant waterer.

Whilst the embodiment described above uses a vessel in the form of a figurine it is conceivable that it could be moulded in the form of a piece of wood bark or a log or other ornamental device which would not look out of place when standing in a plant pot. According to a further embodiment the vessel 10 could be constructed with legs which would support the vessel above the soil 13 with the end of the wick being suspended a short distance above the surface of the soil in which case the water is caused to drip from the end of the wick and onto the soil.

It should be evident that the present invention provides an improved plant waterer which is readily transportable from one plant to another and which is adapted to provide continuous moisture to a plant over an extended period of time. The device is most suitable for

householders when going on holidays since it may be used to water an indoor plant for the duration of the holiday. Furthermore, the waterer according to the invention may be used on outdoor plants, that is, plants in the ground rather than in a pot in which case a larger vessel may be utilized.

Whilst the vessel shown is moulded from plastics material by any suitable form of moulding process clearly it could be moulded or fabricated from any other suitable material.

CLAIMS

1. A portable plant waterer comprising a storage vessel adapted to be filled with water and having means for supporting said vessel in a position generally above the soil surrounding a plant, said vessel having a waterproof tube extending from within the vessel at a point above the normal water level to an outlet in the vessel wall in sealing engagement with the vessel wall, and a wick extending from within said vessel at the lowermost point in use, through said tube to the outside of said vessel whereby water in the vessel may be delivered by said wick to said soil.

2. A portable plant waterer as defined in claim 1, characterized in that, said outlet is in the underside of said vessel.

3. A portable plant waterer as defined in claim 2, characterized in that, a downwardly depending spike arrangement is provided on said underside of said vessel, said spike arrangement being adapted for insertion into said soil for supporting or at least providing stability to said vessel in said position generally above the soil.

4. A portable plant waterer as defined in claim 3, characterized in that, said spike arrangement is in the form of a downwardly pointing hollow cone which covers said outlet and said wick extends through said cone and through a further outlet arranged in the apex of said cone whereby the outer end of said wick is located in said soil.

5. A portable plant waterer as defined in claim 4, characterized in that, said tube extends vertically along the central axis of said vessel and the axis of said cone is coincident with the axis of said tube.

6. A portable plant waterer as defined in claim 5, characterized in that, said wick has a non-corrosive weight attached to the inner end thereof for retaining said inner end below the level of water in said vessel.

7. A portable plant waterer as defined in claim 6, characterized in that, said vessel has a filler cap with air breather hole, said cap facilitating filling of the vessel with water from time to time.

8.    A portable plant waterer as defined in claim 7, characterized in that, said vessel and lid combine to form the shape of a figurine  such that the plant waterer is aesthetically appealing when placed in an indoor plant pot.

9.    A portable plant waterer as defined in claimm 8, characterized in that, holes are provided through the wall of said cone adjacent said apex so that any water which tends to accumulate in said cone is able to pass out through said holes and seep into said soil.

10.    A portable plant waterer as defined in claim 9, characterized in that, a knot is arranged in said wick within said cone whereby the possibility of the outer end of said wick disappearing back into said cone is substantially avoided as is the possibility of too much of the wick being pulled out at said outer end.

1/1

0126574

FIG. 1.

FIG. 2.

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-U-7 439 478 (P.M. DEHAYE) <br><br> * Claims 1, 3; page 4, line 28 - page 5, line 12; figure 1 * | 1,3,4, 9 | A 01 G 27/00 |
| A | DE-U-7 826 191 (W. GÖRTZ) <br> * Claims 1, 5; page 5, line 21 - page 6, line 13; figures 2, 3 * | 1-3,8 | |
| A | FR-A-2 512 638 (J.-P. THOMAS) <br> * Claims 1, 8; pages 1-2; figures 1, 3 * | 1,3 | |
| A | DE-U-6 944 538 (H. GORRIS) | | |
| | ----- | | |
| | | | TECHNICAL FIELDS SEARCHED (Int. Cl. ³) <br><br> A 01 G 27/00 |

The present search report has been drawn up for all claims

| Place of search | Date of completion of the search | Examiner |
|---|---|---|
| BERLIN | 24-07-1984 | BERGZOLL M C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82